# EUROPEAN PATENT APPLICATION

(11) **EP 4 439 327 A1**
(43) Date of publication of application: **02.10.2024**
(21) Application number: 23382295.6
(22) Date of filing: 28.03.2023
(51) Int. Cl.: G06F 16/18, G06F 16/14, G06F 16/176

(54) **METHOD AND SYSTEM FOR IDENTIFYING AN EXPERIMENT RELATED TO A DATASET**

(71) Applicant: Fundacion Centro de Tecnologias de Interaccion Visual y Communicaciones VICOMTECH, 20009 Donostia - San Sebastian (Guipuzcoa) (ES); Aristotle University of Thessaloniki, 54636 Thessaloniki (GR)
(72) Inventor: Konstantinidis, Evdokimos, 54124 Thessalonike (GR); Epelde Unanue, Gorka, 20009 Donostia/ San Sebastián (ES); Bamidis, Panagiotis, 54124 Thessaloniki (GR)
(74) Representative: Balder IP Law, S.L.

(57) **Abstract**

A method and system for identifying an experiment related to a dataset. The method comprises the steps of: providing to a node of a network a dataset and dataset related information; the node providing a data hash related to data which comprises at least part of the dataset; providing to the node a request for an experiment, said request comprising a code and code related information; the node generating a code hash and an experiment identifier; the node executing the experiment, thereby generating results; the node generating a results hash; the node providing to a registration system a request for a registration of the results and registration related information; the registration system processing at least part of the registration related information for generating a file; the registration system registering the file on a blockchain, thereby generating a research identifier; providing to a user the research identifier.

## Description

### TECHNICAL FIELD

The present invention relates to the field of identifying experiments related to datasets. More precisely, it relates to a method for identifying an experiment related to a dataset. The dataset may be shared between a first party or user who produced the dataset and a second party or user who uses said dataset or part of the same for conducting an experiment, using one or more computers which may be parts of one or more computer networks. The dataset, i.e. a set of data, may comprise parts of different datasets. Hence, the experiment may be related to more than one datasets. The experiment may be the analysis of the dataset by (i.e. by means of) computer software. The present invention further related to a system for conducting (performing) the aforementioned method.

### STATE OF THE ART

The advancement of science and technology relies on the sharing of information, data and experimental results between the members of the scientific and technological community. The data produced by a scientist or engineer may be used by another scientist or engineer for the execution of computer-based experiments, e.g. simulations or modelling or analysis, which require processing said data using a computer code or script. The results produced by said experiments may then be disseminated or published so that more scientists or engineers, and/or the public, become(s) aware of, and can benefit from, the work done. In the process involving the aforementioned sharing and utilization of the datasets and of the related experimental results, it would benefit the involved parties if the information is being shared in a way which promotes easily identifying, and if necessary tracing, the resources, e.g. the dataset(s) and the code, which are used for executing the experiment. The identification of the results should ideally be such that it enables the reproducibility of the experiments and the creation of trust regarding the origin and credibility of the shared information. The existing conventional systems and methods for identifying and sharing results why are produced via the computer analysis of datasets which are shared between different parties, do not simultaneously: 1) allow to identify and trace the resources related to the experiments, 2) enable the reproducibility of said experiments, and 3) promote the trust regarding the origin and/or the credibility and immutability of the information of interest related to the experiments.

Therefore, there is a need to develop suitable methods that overcome the aforementioned drawbacks of the conventional ones.

### DESCRIPTION OF THE INVENTION

The present invention overcomes the drawbacks of conventional methods of identifying experiments related to datasets. The present invention advantageously allows for, if necessary, easily identifying and tracing the resources of interest (e.g. the code), the dataset(s) and/or the corresponding authors or contributors related to computer based experiments. The present invention further enables the reproducibility of said experiments, and promotes the creation of trust regarding the origin and/or the credibility and immutability of information related to the experiment.

The invention in a first aspect concerns a method for identifying an experiment related to a dataset. The method comprises the steps of: i) providing to a node a dataset and dataset related information, the node being a computer which is part of a network; ii) the node upon request generating and providing a data hash related to data which comprises at least part of the dataset; iii) providing to the node a request for an experiment, said request comprising the data hash, a code and code related information, wherein the code is executable on the node for processing the data; iv) the node generating a code hash related to the code, and also generating an experiment identifier related to the experiment; v) the node executing the experiment by executing the code in combination with the data, thereby generating results; vi) the node generating a results hash related to the results; vii) the node providing to a registration system a request for a registration of the results, the node also providing to the registration system registration related information which comprises a node identifier, the results hash, the experiment identifier, the data hash, at least part of the dataset related information, the code hash, and at least part of the code related information; viii) the registration system processing at least part of the registration related information for generating a file; ix) the registration system registering the file on a blockchain, thereby generating a research identifier which is related to the registering of the file on the blockchain; x) the registration system providing to the node the research identifier; xi) the node providing to a user the research identifier.

Step (i) which is the first of the aforementioned steps, may be executed using a first computer which may be the node, or may be a different computer connectable to the node, e.g. via the internet. The dataset, which may also be called "data set", may be in the form of a computer file. The network may be called "research analysis identification (RAI) network". Preferably said network comprises a plurality of nodes, more preferably said nodes being certified nodes of the RAI network. The dataset may be uploaded manually or automatically. For example, when a user of said system creates or has available a dataset in a first computer, said first computer may be configured (e.g. be programmed) to automatically upload said dataset to the node. The first step may be repeated one or more times by a single or multiple users, so that more than one datasets are uploaded to the same node, or to a plurality of nodes of the network. Overall, the first step enables making available the dataset for the latter's analysis via the experiment, even when said analysis is requested by a party which differs compared to the provider of the dataset in step (i). Therefore, considering that the code and the dataset may be generated or authored by different parties, it can be understood that the dataset related information may be used as a first identification of the dataset and as an indication or reference for understanding whether the dataset is of interest for being used for the experiment. Moreover, the dataset related information may be such that it enables or facilitates to select one or more datasets to use in an experiment, and/or to trace the dataset(s) used in the experiment, and/or to evaluate the credibility of the results being generated by the experiment/analysis. Hence, in a preferred embodiment of the invention, the dataset related information comprises any of a description of the dataset, a dataset owner, a dataset classification, or a combination thereof. More preferably, the dataset related information comprises the description of the dataset, the dataset owner and the dataset classification. The author(s) of the dataset may be one more scientists or engineers who generated the dataset, or may be the owner(s), e.g. an academic institution or a private company or organization, who own(s) the dataset. Hence, the dataset related information may comprise information regarding both the owner(s) and the author(s) of the dataset. The dataset classification may for example refer to a technical or scientific field related to the dataset. It can be understood that the dataset classification and/or the description of the dataset may advantageously allow for identifying whether the dataset is suitable to be used alone or in combination with other datasets for one or more experiments.

In an embodiment of the method of the invention, after the aforementioned first step (i), the method further comprises updating the dataset. Updating the dataset may be providing to the node a new updated form of the original dataset, or providing to the node instructions so that an updated form of the dataset is being created in the node. Updating the dataset may advantageously allow for improving the quality or completeness of the dataset. The dataset in its updated form may be the one being processed in step (iii) of the method, or may be the one of which at least a part is comprised in the data for (related to) which the data hash is generated in step (ii). The data for which (i.e. related to) the data hash is generated in step (ii), may comprise the entire dataset, and/or may comprise different parts from respective different datasets. Therefore, it can be understood that the experiment referred to in the method, may be conducted for analyzing more than one datasets or parts thereof. If a dataset is updated, then the data in step (ii) may comprise at least part of the updated dataset. Hence, every time a dataset is being updated, step (ii) may correspondingly be repeated for generating a data hash corresponding to the updated dataset or to data comprising at least part of said updated dataset.

In an embodiment of the invention, step (i) is repeated for different datasets and corresponding different dataset related information; the data in step (iii) comprise at least corresponding parts of the different datasets; and in step (vii) the registration related information comprises at least parts of the corresponding different dataset related information. The use of different (i.e. multiple) datasets in an experiment, advantageously allows for utilizing information provided from multiple dataset providers or authors. Moreover, the combination of datasets and dataset related information may allow for advantageously executing meaningful experiments using complete sets of data, especially in cases where creating said complete sets of data would require combining different datasets possibly created by different authors.

As mentioned, in step (ii) the node generates the data hash. It can be understood that the node generates a hash related to some computer data, by applying a hush function to said computer data. Hence, it may be understood that the data hash is generated by the computer (the code) applying a hush function to the data. The data hash can be used for identifying the data which are used for the experiment, and may be also used for later verifying the immutability of the data. Therefore, the data hash may be used as an identifier for the data, and advantageously said identifier may require less computer memory and bandwidth for being stored and transmitted, respectively, compared to the actual data. Moreover, the data hash may allow for identifying the data, even when the said data result from combining several different datasets, because, as indicated further above, the data -i.e. the set of data- used for the experiment, said data also called "experiment data" or "experiment dataset", may comprise the dataset [provided in step (i)], or may comprise part of the dataset, or may comprises all or parts of more than one datasets. The data hash being generated in step (ii), may be provided to one or more parties or parts of the network. For example, said data hash may be provided to a party who requested the generation of the data hash, and said party may be a person or entity requesting, via the node, the experiment. Such a party, prior to requesting the experiment in step (iii), may request in step (ii) the generation of the data hash, and for this purpose the same party may indicate or define the data for which the data hash is to be generated. Such a party for example may access several different datasets provided, as in step (i), to the node, and use said different datasets for forming or defining the data which are to be processed by executing the code in step (v). However, the providing of the data hash in step (ii), may alternatively comprise transmitting and/or storing said data hash in a computer memory, e.g. in a memory of the node or in a memory of a different computer used for providing the request for the experiment.

The code hash generated in step (iv) may advantageously enable identifying the code and reproducing the experiment. The code hash may advantageously act as an identifier for the code used in the experiment, and for ensuring that a subsequent experiment which aims to reproduce an earlier experiment is done using the same code as the earlier experiment.

Therefore, when it is required to examine whether two experiments were done using the same code or not, instead of comparing the codes of the experiments, it may be sufficient to compare the code hashes corresponding to the respective codes. If the code hashes differ from each other, that indicates that the respective codes differ from each other. Moreover, the code hash may advantageously be easily shared between different computers, and for example be communicated from the node to the registration system. Communicating the code hash usually does not require a lot of computer memory, processing power or bandwidth.

The results generated in step (v) of the method may advantageously be identifiable by the results hash generated in step (vi). Hence, the results hash may advantageously act as an identifier which can be transmitted or stored in a computer memory without generally requiring a lot of computer memory and/or bandwidth. Moreover, if the results are transmitted or otherwise being provided by the node, for example if the node provides the results to the registration system as part of the registration related information in step (vii), then the results hash can be used for inspecting and confirming the correctness and immutability of the results being transmitted/provided from the node. This advantageously further promotes the trustworthiness of the overall method.

The inclusion in the registration related information of the results hash, of the data hash and of the code hash, can enable confirming that the experiment has been registered correctly, because the hash of a respective registered set of information or computer data can be used to verify whether said set of set of information or computer data was/were subsequently altered. Therefore, it can be understood that the results hash, the data hash and the code hash which are included in the registration related information, further enable the identification and the reproducibility of the registered experiment. For example, if two code hashes of two respective registered experiments differ from each other, this means that the respective codes of the experiments also differ from each other. Similarly, a comparison of two results hashes or of two data hashes of two respective experiments, can enable identifying whether the results or the data of the experiments differ, respectively, or not.

The inclusion of the node identifier in the registration related information can enable knowing and tracing the node of the network in which the experiment was conducted. This may serve the purpose of reproducing, if necessary, the experiment, improving the trustworthiness, transparency and credibility of the overall method, and may also be useful for confirming that the registration related information provided to the registration system is correct. In the optional case for example that the registration related information, or any other information related to the experiment, is also stored in a memory of (i.e. a location at) the node, by knowing the identity of the node, there could be confirmed whether the registration related information, or any other important experiment related information being provided to the registration system, matches the corresponding information being stored in the node. Hence, in a preferred embodiment of the method, the node appends to the experiment identifier, information related to a location of the results at the node. The information related to the location of the results at the node, when is appended to the experiment identifier, can be used for locating and accessing the results.

The registration related information in step (vii) of the method may optionally comprise more data or components from the ones described above. In a preferred embodiment, said registration related information comprises the results and a description of the results.

In a preferred embodiment of the method according to the invention, for generating the file in step (viii), the registration system processes the registration related information. In a preferred embodiment, said file comprises data for experiment reproducibility, and also comprises metadata information of the experiment. The data for experiment reproducibility may advantageously facilitate the reproduction of the experiment. Preferably the computer (i.e. the node or the computer of the node), for generating the data for experiment reproducibility, hashes information on a code author (i.e. the author of the code), the data used in combination with the code for the experiment, the code and the results, said information (i.e. the information hashed by the computer) being comprised by the registration related information of which at least a part is processed in step (viii). In a preferred embodiment wherein the file comprises the metadata information mentioned further above, said metadata information of the experiment may optionally comprise information (e.g. the node identifier) regarding the node which executes the experiment, the description of the experiment, and the code author.

In a preferred embodiment of the method, the file being generated in step (viii) is a JSON file, i.e. is a computer file of which the file format is JSON. Advantageously, a JSON file is generally compact and easy to read and understand.

The registering of the file on the blockchain in step (ix) of the method according to the invention, allows for creating a trustworthy immutable shared and accessible record (on the blockchain) which can be used for verifying that the content or form of the file has not been altered after the registering. The blockchain may be considered as an immutable and shared ledger which may facilitate the recording of transactions and the tracking of assets. Therefore, when the file is subsequently shared between, or accessed by, different parties, said parties may use the blockchain to verify that the file corresponds to the one with respect to which the registering in step (ix) of the method took place. The registering of the file in step (ix) results to the generation (creation) of the research identifier. It can be considered that the research identifier identifies the respective blockchain registration transaction. Hence, the research identifier which is provided to the user via step steps (x) and (xi), can be further disseminated by the user, e.g. the user can provide the research identifier to third parties, such as to a scientific journal or to colleagues of the user, so that said third parties may advantageously use the research identifier for tracing and even accessing the information related to the experiment, for the example the code related information.

Considering the above, in a preferred embodiment of the method, the latter further comprises the steps of: xii) the user or a third party using the research identifier for making a query to the registration system; xiii) the registration system providing to the user or the third party the registration related information or parts thereof.

In a preferred embodiment of the invention, the code comprises a script, and the code related information in step (iii) comprises a code author, a description of the code, a computing environment against which to run the script, or a combination thereof. In a preferred embodiment the code related information in step (iii) further comprises a type of usage. The type of usage may refer to an indication as to whether the code is fully open, meaning that code can be used or accessed by anybody, or the usage is permitted under permission i.e. a permission is required for the code to be used, or the usage is closed i.e. a usage of the code by thirds is not allowed. By indicating the code author, the description of the code, and the computing environment against which to run the script, advantageously the code related information can be used for simultaneously crediting the code's authors and promoting the correct use of the code (script).

In a preferred embodiment of the method according to the invention, after step (iii), the method further comprises the step of: iii-a) generating an experiment timestamp related to the requesting of the experiment in step (iii). The generation of the timestamp advantageously may be useful for subsequently verifying when (i.e. the moment at which) the experiment was requested, further promoting the credibility and trustworthiness of the overall method and of the related identification. Optionally, said experiment timestamp may be provided to a party or user that requested the experiment, or may be included in the registration related information provided by the node to the registration system in step (vii). Step (vii), i.e. the providing of registration related information and of the request for the registration of the results, may be done automatically by the node for any experiments conducted (executed) in the node, or may be done only after the node receives a specific respective request. Such a request may for example be provided/indicated by a user who also requests the experiment. Hence, in a preferred embodiment of the method according to the invention, the node executes step (vii) upon receiving a prior respective request.

In a preferred embodiment of the method according to the invention, after step (vii), the following steps are also performed: vii-a) the registration system generates a results registration identifier; vii-b) the registration system stores the registration related information and assigns the latter to the results registration identifier; vii-c) the registration system sends the results registration identifier to the node; and preferably, viii-d) the node uses the results registration identifier for inquiring at the registration system regarding any of the request for the registration of the results, the registration related information, a status regarding the registration of the results, or a combination thereof. Therefore, the aforementioned optional steps (vii-a) to (vii-d) advantageously permit the node to access information that may be stored on the registration system in relation to the registration of the results, and also advantageously enables monitoring the registration process.

A second aspect of the invention concerns a system which comprises a node and a registration system, wherein the node is configured to perform the aforementioned steps (iii), (v), (vi), (vii), (xi) of the method, and the registration system is configured to perform steps (viii), (ix) and (x) of the method of the first aspect of the invention. The registration system may also be called registration subsystem, registration module or registration service. It can be understood that the node and the registration system may be configured for further enabling (i.e. executing) any of the aforementioned embodiments of the first aspect of the invention. For this purpose, the node and the registration system may communicate or be communicatively connected to each other so that they can transmit to each other data, information or instructions. From the above it can be understood that the node of the system of the second aspect of the invention is a computer, e.g. is a server, that is part of a computer network, and is configured to be provided with, i.e. receive, the dataset and dataset related information as in step (i) of the method, as well as receiving (i.e. be provided with) the request for the experiment, as in step (ii) of the method. It may be considered that the node is further configured, e.g. is programmed, to perform, preferably automatically, the aforementioned steps (iii), (v), (vi), (vii), (xi) of the method of the first aspect of the invention. Likewise, it can be considered that the registration system of the system of the second aspect of the invention is computer-based, i.e. comprises at least one computer which may be the computer of the node or a different one. The registration system is configured to execute, preferably automatically, the aforementioned steps (viii), (ix) and (x).

Optionally and preferably the system of the second aspect of the invention further comprises a finder service, e.g. a server such as cloud based server (a server accessible via the internet), which is connectable (or connected) to the registration system and/or the node. A party having (knowing) the research identifier can find and access, via the finder service, the information related to the experiment (e.g. the information registered by the registration service and/or the information stored in the node). The finder service may be appropriately configured for this purpose, and in particular it may be configured to receive from a user the research identifier, and to search and find in the registration service and/or the computer network of the node, the information related to the research identifier and the corresponding experiment.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 illustrates a flow diagram of an embodiment of the method according to the first aspect of the method.
Figure 2 schematically illustrates an embodiment of a system according to the second aspect of the invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and results according to the invention.

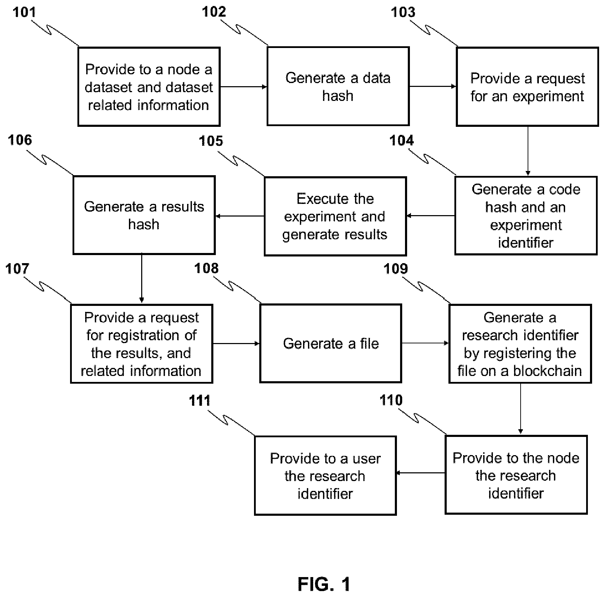

An embodiment of the method for for identifying an experiment related to a dataset is explained next. The embodiment of the method shown in Fig. 1 comprises the following steps.

In step 101, a user provides (i.e. uploads) to a node a dataset and dataset related information, wherein the node is a computer which is part of a network. Preferably the dataset related information comprises a description of the dataset, a dataset owner, a dataset classification. It is noted that the dataset that is uploaded to the node, may also be called "study dataset".

In step 102 the node upon receiving a request, generates and provides a data hash related to data which comprises at least part of the dataset. It is noted that the data may be the same, i.e. consists of, the dataset, or the data may comprise parts of more than one datasets (study datasets). Hence, the data for which the data hash is generated, may also be called "experiment dataset" so that can be distinguished from the one or more datasets which may have been uploaded to the node as in step 101. The request for the generation of the data hash, may be provided to the node by a user who wishes to perform an experiment. Said user may be the one who provided the dataset, or may a different one, and prior to providing said request, the same user may define or form the data using more than one datasets (i.e. study datasets) which may have been uploaded to the node via step 101.

In step 103, there is provided to the node a request for an experiment. Said request comprises the data hash, a code and code related information. Preferably, the code comprises a script, and said code related information comprises a code author, a description of the code, and a computing environment against which to run the script. The computing environment may for example be an indication of a version of a computer programming language (e.g. Python version corresponding to Docker image + library dependencies). Generally, the code is executable on the node for processing the data. It is noted that the request of the experiment may be provided to the node from the same user(s) who provided (i.e. uploaded) the dataset(s), or may be provided by a different user. Preferably, after step 103, and before step 104, the method further comprises a step in which the node automatically generates an experiment timestamp related to the requesting of the experiment in step 103.

In step 104 the node generates a code hash related to the code, and also generates an experiment identifier related to the experiment. It is noted that the experiment identifier may comprise the code hash or may be generated by the node using the code hash. The code hash may be used for identification and reproducibility purposes. It is noted that the node may optionally append to the experiment identifier, information related to a location of the results at the node. Hence, said optional information may be used for locating the results at the node.

In the step 105 the node executes the experiment by executing the code (the script) in combination with the data, thereby generating results. Executing the code in combination with the data may be understood as analyzing (processing) the data by running the code's script.

In step 106 the node generates a results hash related to the results. Hence, it may be considered that in step 106 the node applies a hash function to the results, thereby generating the results hash. The results hash can be used for both identification and reproducibility purposes.

In step 107 the node provides to a registration system a request for a registration of the results, and also the node provides to the registration system registration related information. It is noted that the node may provide said request, automatically, or upon receiving a respective request or instruction, for example from the user who instructed the experiment. The registration system may be a server, e.g. a cloud-based server, which is connected or connectable to a blockchain network. There is also contemplated the possibility that the registration system is a server which also is the node. The registration related information comprises a node identifier, the results hash, the experiment identifier, the data hash, at least part of the dataset related information, the code hash, and at least part of the code related information. More preferably, the registration related information further comprises the results and a description of the results. The node identifier may be a series of letters, numbers or symbols which identifies the node within a network of other nodes of the network. The nodes of said network may also be certified nodes of the network.

In step 108 the registration system processes at least part of the registration related information for generating a file. The processing of the at least part of the registration related information may comprise (involve) hashing (i.e. applying a hash function to) said information. Moreover, the creation of said file may comprise first the registration system creating file components, and then combining and/or processing said file components. Preferably, said file is a JSON file.

In step 109 the registration system registers the file on a blockchain, thereby generating a research identifier. The research identifier is related to the registering of the file on the blockchain. Preferably the research identifier is the blockchain identifier of the blockchain registration transaction.

In step 110 the registration system provides to the node the research identifier. Then, in step 111 the node provides to a user the research identifier. The user may then provide the research identifier to any third party. Hence, the user or the third party may subsequently use the research identifier for making a query to the registration system. In turn, the registration system may provide to the user or the third party, directly or directly the registration related information or parts thereof.

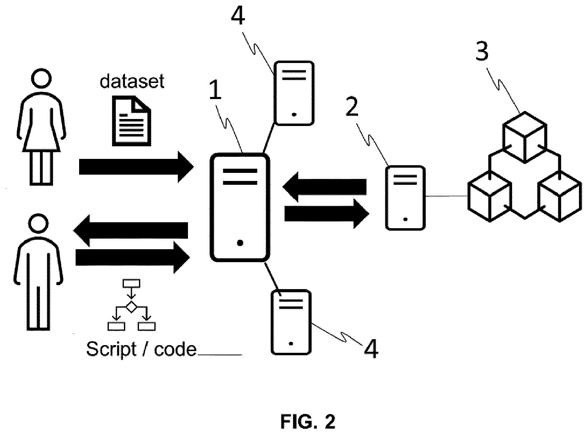

The flow information in an embodiment of a system according to a second aspect of the invention is indicated by the thick black arrows in FIG. 2. The system shown in FIG. 2, is a system for identifying an experiment related to a dataset, and comprises a node 1 and a registration system 2 which is a server and is connectable to the node. In the embodiment of FIG. 2 the node 1 is a certified node of a network which comprises additional certified nodes 4, and the registration system is connectable to a blockchain network 3. A first user provides/uploads datasets on the node 1, and a second user provides to the node a code for an experiment and requests the execution of the experiment for processing data which comprise one or more of the datasets which have been uploaded (provided) to the node. The code provided by the second user comprises a script for processing said data. The node 1 and the registration system are configured for conducting the steps of the method of the first aspect of the invention.

A particular embodiment of the method according to the invention, which is performed using the system of FIG. 2, is as follows:
1. A first user (data uploader) uploads a dataset to the node 1. When a dataset (research data asset) is uploaded to a node (RAI certified node - RCN):
   a. The data uploader registers and provides study dataset-related informative *study_dataset_description.* This dataset related information comprises:
      i. A Description
      ii. A Dataset owner
      iii. Some dataset classification (if there is category defined within that use case)
   b. The node assigns a *study_dataset_id* to the dataset.
   c. The data uploader uploads data points for the registered *study_dataset*
      i. Step c above, can be done once, or updated several times
   d. Node computes *descriptive_statistics* and updates every time new data points are uploaded.
2. When and if the user (external researcher) requests synthetic/anonymised version (usually aiming to also share a size-reduced dataset version) of the data, this request is made through a query (can involve more than one *study_dataset* and filtering them), and an *experient_dataset_hash* of the composed *dataset_for_experiment* is computed. The *dataset_for_experiment* is the data for the experiment, and the *experient_dataset_hash* is the data hash. This *experient_dataset_hash* is used to ensure reproducibility and as an identifier of the data points to be used in the experiment.
3. When the user requests an experiment to a node (s) he/she has to provide the following information:
   a. A Code author (usually automatically extracted from the user's login)
   b. A Code and code related information. The code and the code related information comprise:
      i. A Description
      ii. A Script
      iii. A Usage - fully open / open under permission / closed
      iv. A Computing environment against to run the script (Python version corresponding to Docker image + library dependencies)
   c. The experiment dataset (i.e. the data) is identified by *experient_dataset_hash*
   d. The node automatically generates *experiment_request_timestamp*
   e. The node automatically generates *source_code_hash* (used both for identification and reproducibility). The *source_code_hash* is the code hash.
4. Upon this experiment request:
   a. The node gives an experiment_id identifier (i.e. experiment identifier)
   b. The node saves the information associated to the *experiment_id (generated in the previous step)*
   c. And runs the experiment (queues the task for running)
5. Upon experiment execution,
   a. Results location information is appended to the experiment id associated information
   b. The Node generates a *results_hash (i.e. the results hash), which* serves as an identifier and for reproducibility purposes.
   c. The user is informed of the results availability and can check the results.
6. Once the user generates successful results (iterating over steps 2-5 indicated above), the user requests the registration of these results to the node that run the experiments. The node has all the required information, so upon user's request, the node compiles the required information and makes a registration request to the RAI (research analysis identifier) registration service. Information (i.e. the registration related information) compiled and shared from the node to the registration service contains:
   a. Registration requesting Node identifier and optionally instructions regarding how to reach back from the registration system
   b. Experiment id
      i. This is for the purpose of later assigning generated RAI identifier to an experiment within the node (not critical / relevant as experiment information will also be stored in the registration system)
   *c. Experiment_dataset*
      *i. experiment_dataset_hash*
         1. Serves at both identifier & reproducibility purposes.
      *ii. Information on the source study_datasets that participate in the experiment_dataset*
      *iii.* Optionally, *data points*
   *d. Code*
      *i. Code_description*
      *ii. Source_code*
         *1. Encrypted (currently), but can depend on the approach implemented*
      *iii. Source_code_hash*
         1. Serves at both identifier & reproducibility purposes.
   e. *Results*
      *i. Results_description*
      *ii. Results*
      *iii. Results_hash*
         1. Serves at both identifier & reproducibility purposes.
7. RAI registration (i.e. the egistration service) upon a registration request:
   a. Generates a *results_registration_id* (this id is not critical / relevant)
   b. Stores the information sent in the request, and assigns it to the *results_registration_id*
   c. Sends *results_registration_id* back to the registration requesting node. The node can check the status of registration with this id, or consult the information send for registration.
8. Starting from the information on the request, RAI registration service, creates the (json) file that will be registered to the blockchain. This file is composed of two sections (json elements):
   a. *Data_required_for_experiment_reproducibility*
      i. Information on *author, experiment_dataset, code* and *result* are hashed to achieve a smaller size content to write to the blockchain in a later state.
         1. (Not sure if relevant) This is made in two steps, first a json element is composed of hashes of individual information items and in a second step this element is hashed again to make it smaller.
      ii. Together with this information, *Data_required_for_experiment_reproducibility* creation data is written and the hashing approach is recorded.
   b. *Metadata* information of the experiment
      i. Node where experiment was run, experiment description and author are stored.
9. Upon information element definition, it is requested to be written to the blockchain network (private network setup). For example, the BigChainDB & Hyperledger Fabric blockchain networks are used.
10. Upon registering the information file in the blockchain, the resulting blockchain registration transaction id is named as *RAI_identifier* and is stored within the *results_registration_id. RAI_identifier* is then returned to the registration requesting node. Registration requesting node (RCN) returns the user (external research) to the user, so that he can disseminate it.
11. Once a researcher/reviewer/publisher of journal / patent /... finds a *RAI*_*identifier* (e.g., in a call for papers submission) and wants to resolve and work with it, the interaction is composed of two steps:
   a. User makes a query to the RAI registration service and gets the experiment composing information (including the node (RCN) that performed and registered such experiment).
   b. Starting from that information the user can:
      i. Visualise results stored in the registration service
         1. Download experiment_dataset if marked as open.
      ii. Visualise code stored in the registration service (if the author opted for it)
         1. Needing to make a request for permission in some cases.
      iii. See for descriptive information (author, dataset, code, results description) from the registration service.
      iv. Access the node hosting *experiment_dataset* and repeat the experiment to reproduce experiment results
         1. Check experiment "raw" results
         2. Perform the established hashing procedure on the *Data_required_for_experiment_reproducibility* and check that it matches that provided by the Registration system when resolving the *RAI_identifier*
      v. Alternatively, user can access node hosting *experiment_dataset* and try updated code over the same *experiment_dataset* or try the same code over different *experiment_dataset*

Hence, at least some embodiments of the method of the present invention may advantageously enable to generate the Research Analysis Identifier (RAI), which may be used to guarantee the reproducibility of a software analysis, reflecting authorship, source dataset (open dataset or protected dataset), algorithm and results. Hence, at least some embodiments of the present invention may advantageously enable the transition from using a DOI (digital object identifier), towards using an RAI identifier, which may advantageously allow a researcher, journal or patent reviewer, or company that wants to purchase and utilize an intellectual property right (IPR), to reproduce the experiments (including protected datasets), and have the certainty/guarantee of the experiment (reflecting authorship, timestamp, source dataset, algorithm) that has given rise to the results that are intended to be judged. Moreover, at least some embodiments of the system and method of the present invention, may advantageously allow that any researcher can upload to a RAI Certified Node a processing script or programming code block which would run on desired remote data available in this Node, processing them without giving the researcher direct access to raw or allow downloading. In said least some embodiments, once the data processing has finished, the RAI Certified Node may register the results through the RAI Registration Service, which hence generates the RAI identifier and stores it along with the results, the data origin, the processing script and a description of the algorithm to a blockchain server.

The aforementioned RAI Finder Service is an optional and prfereable component which may advantageously allow anyone to get access to the registered results, the origin of the data and the algorithm description, or even the processing script if the researcher has opt-in for open algorithm sharing. An optional similar second finder service may be used by researchers to easily find valuable datasets for their studies. The RAI can be cited in scientific publications to allow reviewers or readers to verify the authenticity of the results without having to reproduce them.

The RAI approach/model, which is enabled by at least some embodiments of the present invention, may advantageously allow the researchers to remain the owners of their datasets while at the same time making them equally available to anyone for processing. In particular, a trusted party may secure the accreditation of the researchers' contribution. Based on the RAI model, researchers may upload their data on their own or any other RAI Certified Node (RCN). Then, other investigators may load processing algorithms (scripts) which could run on the remotely hosted datasets, running the algorithm, optionally without allowing the investigator to download or access them directly (avoiding information disclosure). When the requested experiment computation is completed, the RAI Certified Node may register the results (together with source dataset and processing algorithm identifier and description) to a blockchain network through a RAI Registration Service, receiving a Research Analysis Identifier (RAI) as the outcome of the registration process. The RAI Finder Service, i.e. the finder service which as mentioned further above, is an optional and preferable part of the system of the second aspect of the invention, which can enable the system's users to find, resolve and access registered experiment results, source dataset and processing algorithm identifiers and descriptions, or even the actual assets (or some of them) if the researcher (the user who requested/did the experiment) has opt-in for open experiment sharing. Similarly, the researchers may easily search and find valuable datasets for their studies. Advantageously the RAI may enable the validation of the experiment results' authenticity and veracity (without having to reproduce them) in different contexts (e.g., scientific publication, patent submission or industrial IP / contract negotiation), and can be used to cite the immutable experiment assets (reachable through the RAI Finder Service). To facilitate the development of algorithms for new experiments, the RAI Certified Nodes, may preferably offer researchers downloadable synthesized versions of a controlled dataset, maintaining the same structure and statistical properties of the source dataset, while preserving and keeping sensitive information private.

In this text, the term "comprises" and its derivations (such as "comprising", etc.) should not be understood in an excluding sense, that is, these terms should not be interpreted as excluding the possibility that what is described and defined may include further elements, steps, etc.

In the context of the present disclosure, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about", "around" and "substantially".

The invention is obviously not limited to the specific embodiment(s) described herein, but also encompasses any variations that may be considered by any person skilled in the art (for example, as regards the choice of components, configuration, etc.), within the general scope of the invention as defined in the claims.

## Claims

1. A method for identifying an experiment related to a dataset, the method comprising the steps of:
i) providing to a node a dataset and dataset related information, the node being a computer which is part of a network;
ii) the node upon request generating and providing a data hash related to data which comprises at least part of the dataset;
iii) providing to the node a request for an experiment, said request comprising the data hash, a code and code related information, wherein the code is executable on the node for processing the data;
iv) the node generating a code hash related to the code, and also generating an experiment identifier related to the experiment;
v) the node executing the experiment by executing the code in combination with the data, thereby generating results;
vi) the node generating a results hash related to the results;
vii) the node providing to a registration system a request for a registration of the results, the node also providing to the registration system registration related information which comprises a node identifier, the results hash, the experiment identifier, the data hash, at least part of the dataset related information, the code hash, at least part of the code related information;
viii) the registration system processing at least part of the registration related information for generating a file;
ix) the registration system registering the file on a blockchain, thereby generating a research identifier which is related to the registering the file on the blockchain;
x) the registration system providing to the node the research identifier;
xi) the node providing to a user the research identifier.

2. A method according to claim 1, wherein the dataset related information comprises a description of the dataset, a dataset owner, a dataset classification or a combination thereof.

3. A method according to claims 1 or 2, wherein after step i), the method further comprises updating the dataset.

4. A method according to any of the preceding claims, wherein: step i) is repeated for different datasets and corresponding different dataset related information; the data in step iii) comprise at least corresponding parts of the different datasets; and in step vii) the registration related information comprises at least parts of the corresponding different dataset related information.

5. A method according to any of the preceding claims, wherein the conde comprises a script, and the code related information in step iii) comprises a code author, a description of the code, a computing environment against which to run the script, or a combination thereof.

6. A method according to any of the preceding claims, wherein after step iii) the method further comprises the step of:
iii-a) generating an experiment timestamp related to the requesting of the experiment in step iii).

7. A method according to any of the preceding claims, further comprising the step of:
vi-a) the node appending to the experiment identifier, information related to a location of the results at the node.

8. A method according to any of the preceding claims, wherein the node executes step vii) upon receiving a prior respective request.

9. A method according to any of the preceding claims, wherein following step vii) the method further comprises the steps of:
vii-a) the registration system generating a results registration identifier;
vii-b) the registration system storing the registration related information and assigning the latter to the results registration identifier;
vii-c) the registration system sending the results registration identifier to the node, and preferably,
viii-d) the node using the results registration identifier for inquiring at the registration system regarding any of the request for the registration of the results, the registration related information, a status regarding the registration of the results, or a combination thereof.

10. A method according to any of the preceding claims, wherein the file comprises data for experiment reproducibility and metadata information of the experiment, and wherein for generating the data for experiment reproducibility the computer hashes information on a code author, the data used in combination with the code for the experiment, the code and the results, said information being comprised by the at least part of the registration related information which is processed in step viii).

11. A method according to claim 10, wherein the metadata information of the experiment comprise information regarding the node executing the experiment, the description of the experiment, and the code author.

12. A method according to any of the preceding claims, wherein the file generated in step viii) is a JSON file.

13. A method according to any of the preceding claims, further comprising the steps of:
xii) the user or a third party using the research identifier for making a query to the registration system;
xiii) the registration system providing to the user or the third party the registration related information or parts thereof.

14. A method according to any of the preceding claims, wherein the registration related information in step vii) further comprises the results and a description of the results.

15. A system for conducting a method which is according to any of the preceding claims, the system comprising a node (1) and a registration system (2), wherein the node (1) is a computer which is part of a network and is configured to receive a dataset and dataset related information; the node (1) is further configured to execute steps iii), v), vi), vii), xi) of the method; and the registration system (2) is configured to execute steps viii), ix) and x) of the method.
